# EUROPEAN PATENT SPECIFICATION

(11) **EP 2 489 955 B1**
(45) Date of publication and mention of the grant of the patent: **15.06.2016**
(21) Application number: 12155852.2
(22) Date of filing: 16.02.2012
(51) Int. Cl.: F24H 1/43

(54) **Condensing heat exchanger for a gas boiler**
Kondensationswärmetauscher für einen Gasboiler
Échangeur de chaleur à condensation pour chaudière à gaz

(30) Priority: 16.02.2011 IT MI20110229
(43) Date of publication of application: 22.08.2012
(73) Proprietor: Riello S.p.A., Legnago (IT)
(72) Inventor: Casiraghi, Stefano, 23875 Osnago (IT); Ciofolo, Noè, 23816 Barzio (IT)
(74) Representative: Bergadano, Mirko

(56) References cited:
- WO-A1-84/02387
- WO-A1-2011/002711
- WO-A2-2010/140175
- FR-A1- 2 854 229
- US-A- 4 583 495

## Description

The present invention relates to a condensing heat exchanger for a gas boiler.

In particular, the condensing heat exchanger comprises a casing, in which combustion fumes are conducted to an outlet port; a first and a second hollow elongated member equipped with respective end portions and wound at least partly about an axis to form a first and a second helix, which are arranged successively along the axis inside the casing, and form respective turns separated by respective helical gaps; the first and the second helix being designed to define, between the end portions and a turn of the first helix and a turn of the second helix facing each other, a space having a dimension parallel to the axis that is larger than the helical gaps.

The condensing heat exchanger of the type identified above is known from document WO 2004/036121 A1.

Such a condensing-type heat exchanger has the drawback of requiring the deformation by hydroforming of the helixes arranged in series, and of subjecting the walls of the elongated and continuous members at the end portions, to increased deformations to obtain a further gap, which extends between the first turns and the second turns in the transition area from the first to the second helix, and is the same size as the first and the second gap. The mentioned deformations may make the walls of the hollow elongated member excessively thin, which, in use, is arranged in a particularly aggressive environment: the condensation of the combustion fumes generates acid substances. Moreover, the continuous localized deformation of the elongated members is expensive and costly processing. Other type of heat exchanger including more than one hollow elongated member wound in a helix are disclosed in WO 84/02387, WO 2011/002711, FR 2,854,229, and US 4,583,,495. All of them appear complicated and expensive to manufacture.

It is an object of the present invention to provide a condensing heat exchanger which is simple to manufacture, resistant, and functional without jeopardizing the heat exchange capacities and the performance thereof.

According to the present invention, a condensing heat exchanger for a gas boiler is provided; the heat exchanger comprising a casing in which combustion fumes are conducted to an outlet port; a first and a second hollow elongated member, having respective end portions and wound at least partly about an axis so as to form a first and a second helix, which are arranged successively along said axis inside the casing, and form respective turns separated by respective helical gaps; the first and the second helix being configured to define, between the end portions and a turn of the first
helix and a turn of the second helix facing each other, a space having a dimension parallel to the axis that is larger than the helical gaps, the combustion fume outlet port being arranged to communicate directly with said space.

Thereby, the fumes are expelled in an intermediate area of the exchanger without the need for a combustion fume collector arranged at one end of the heat exchanger.

In accordance with the present invention, the elongated and continuous members do not require a localized deformation so as to form a space which, in the case shown, is considerably larger when compared with the dimensions of the helical gaps.

Rather than damaging the operability of the heat exchanger, this space has advantageous applications: in accordance with a first embodiment of the present invention, the space allows combustion fumes to be extracted between the two helixes, and in accordance with a second embodiment of the present invention, allows to obtain a passage which minimizes the load losses of the combustion fumes inside the heat exchanger.

In both cases, there is no need to provide a combustion fume collector at one end of the exchanger, and accordingly, the length of the exchanger is also shorter.

According to preferred embodiments of the present invention, the space dimension parallel to the axis is larger than the axial dimension of one turn and/or the space has a maximum extension about the axis which subtends an angle of 180°.

Advantageously, it is as though the space formed between the two elongated members was determined by the absence of a portion of turn along an angular stretch, which, in maximum extension, subtends an angle of 180° about axis A. This configuration facilitates the construction of the heat exchanger and allows a space to be obtained such as to allow the passage of the combustion fumes without generating high load losses.

According to a preferred embodiment of the present invention, the first helix defines a first tubular compartment, placed inside the first helix, and a first annular compartment, placed outside the helix and communicating with the first tubular compartment via the helical gap; the second helix defines a second tubular compartment, placed inside the second helix, and a second tubular compartment, placed outside the second helix and communicating with the second tubular compartment via the helical gap; and the heat exchanger comprises at least a first baffle configured to prevent direct communication between the first tubular compartment, on one side, and the space and the second tubular compartment, on the other.

This configuration allows alternative circulations to be obtained of the fumes inside the casing.

Preferably, the heat exchanger comprises a combustion fume extraction conduit fitted to the outlet port and extending at least partly inside the space, so as to expel the combustion fumes directly from the casing, in particular from the second tubular compartment.

According to an alternative preferred embodiment, the heat exchanger comprises a second baffle, which is located along a turn adjacent to the space and on the side opposite to the first baffle with respect to the space, and is configured to separate the second annular compartment from the first annular compartment and from the space; the combustion fume outlet port being arranged to communicate directly with the second annular compartment.

Thereby, an exchanger is provided in which the combustion fumes from the supply area inside the first tubular compartment transit via the helical gap in the first annular compartment and converge via said space in the second tubular compartment, from which they access the second annular compartment, via the helical gap, and therefore the outlet port.

There is no need in this case either, to arrange a combustion fume collector at one of the ends of the exchanger.

Preferably, the end portions of the first and of the second hollow elongated member are substantially straight and parallel to each other.

Due to this solution, there is a need to wind only one portion of the elongated and continuous members into a helix.

Preferably, the end portions extend partly inside and partly outside the casing.

This solution allows the connection with the rest of the hydraulic circuit associated with the heat exchanger, to be obtained outside the casing.

In general, each hollow elongated member is only supported at the ends opposite to the casing.

In particular, the casing comprises a lateral wall, preferably cylindrical, and at least one supporting member for hermetically supporting the end portions along the cylindrical wall.

From a structural viewpoint, the construction of the heat exchanger is thereby simplified.

According to a preferred embodiment of the present invention, the hollow elongated members each comprise a tube with fins deformed locally, parallel to the axis, to form lips, which act as spacers between the turns of the respective first and second helix, and between the adjacent turns of the first and of the second helix.

Thereby, there is no need for spacers between the turns of each of the first and the second helix and the adjacent turns of the first and the second helix, thus further simplifying the heat exchanger from a constructional viewpoint.

Further features and advantages of the present invention will become more apparent from the following description of non-limiting embodiments thereof, with reference to the figures of the accompanying drawings, in which:
- figure 1 is a diagrammatic top view, with parts removed for clarity, of two hollow tubular members partly wound in a helix of the condensing heat exchanger the object of the present invention;
- figure 2 is a diagrammatic top view, with parts removed for clarity, of a detail of the tubular members in figure 1;
- figure 3 is a diagrammatic top view, with parts removed for clarity, of a first embodiment of the condensing heat exchanger object of the present invention;
- figure 4 is a diagrammatic top view, with parts removed for clarity, of a second embodiment of the present invention;
- figure 5 is a diagrammatic cross-sectioned view, with parts removed for clarity, of the exchanger in figure 3;
   - figure 6 is a perspective and a sectional view of the exchanger in figure 3; and
   - figure 7 is a perspective and a sectional view of the exchanger in figure 4.

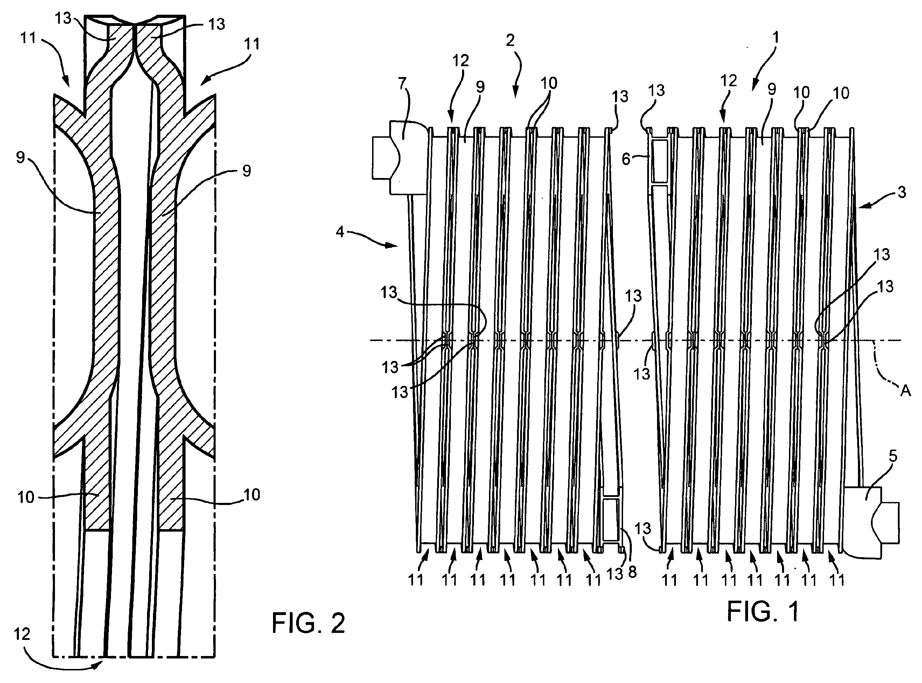

With reference to figure 1, two hollow elongated members 1 and 2 are illustrated, which are at least partly wound about an axis A so as to form two respective helixes 3 and 4. The hollow elongated member 1 has an end portion inserted in a fitting 5, and an end portion 6 which is substantially straight and tangential to helix 3. The hollow elongated member 2 has an end portion inserted in a fitting 7, and an end portion 8 which is substantially straight and tangential to helix 4.

The hollow elongated members 1 and 2 thus shaped are substantially identical and oriented in opposite directions along axis A. The hollow elongated members 1 and 2 are made from an extruded and straight section bar, which comprises a tube 9 and fins 10 parallel to tube 9 as better shown in figure 2.

The extruded and straight section bar is preferably made of aluminium or an aluminium alloy and is sized so as to give the hollow elongated members 1 and 2 such a rigidity to allow the hollow elongated members 1 and 2 to have form stability and self-bearing capacity also when in use. Each of the hollow elongated members 1 and 2 forms some adjacent turns 11 separated by a helical gap 12, which, practically, extends between two faces of tube 9 and between the fins 10, which are substantially oriented in radial direction. The fins 10 have lips 13 made by local deformation of the fins 10 so as to keep the turns 11 spaced apart. Figure 2 shows the configuration of tube 9 and of the fins 10 of two adjacent turns 11 in greater detail, and in particular, of the lips 13.

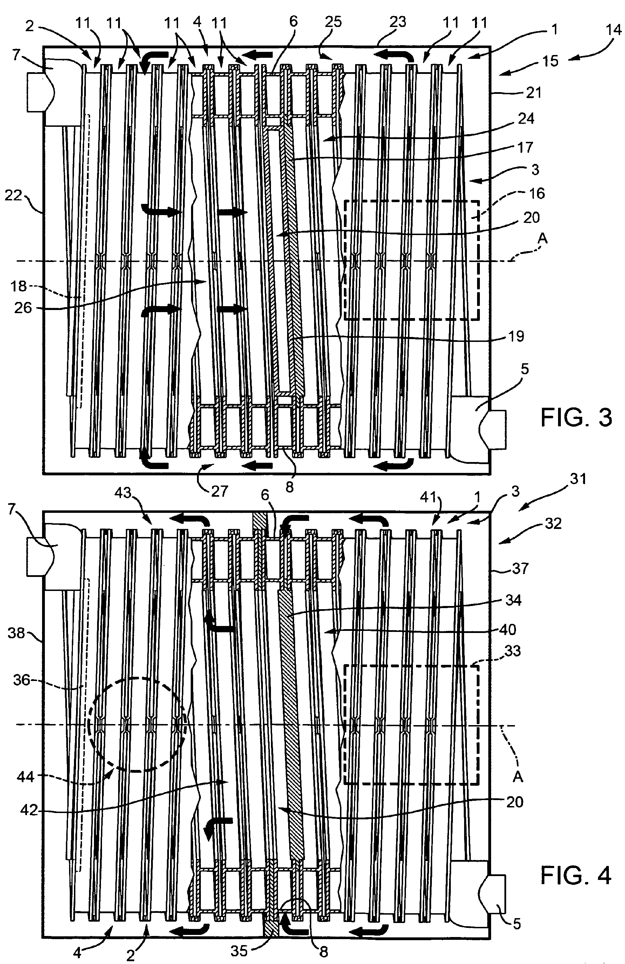

The hollow elongated members 1 and 2 may be combined with each other to obtain heat exchangers, in the case shown, condensing heat exchangers. With reference to figure 3, numeral 14 indicates a first type of condensation exchanger, which comprises the hollow elongated members 1 and 2; a casing 15; a combustion fume supply area 16; two combustion fume baffles 17 and 18; and one combustion fume extraction conduit 19. The hollow and elongated members 1 and 2 partly wound in a helix are arranged in reciprocal contact at the respective straight end portions 6 and 8 and at the parts of turns 11 adjacent to the straight end portions 6 and 8.

The lips 13 also allow the helical gap 12 to be kept between the two helixes 3 and 4 and at least along the stretches of near turns 11. This configuration determines the formation of a space 20, substantially in the form of an annular-shaped sector, between two turns 11 facing each other and the two straight end portions 6 and 8.

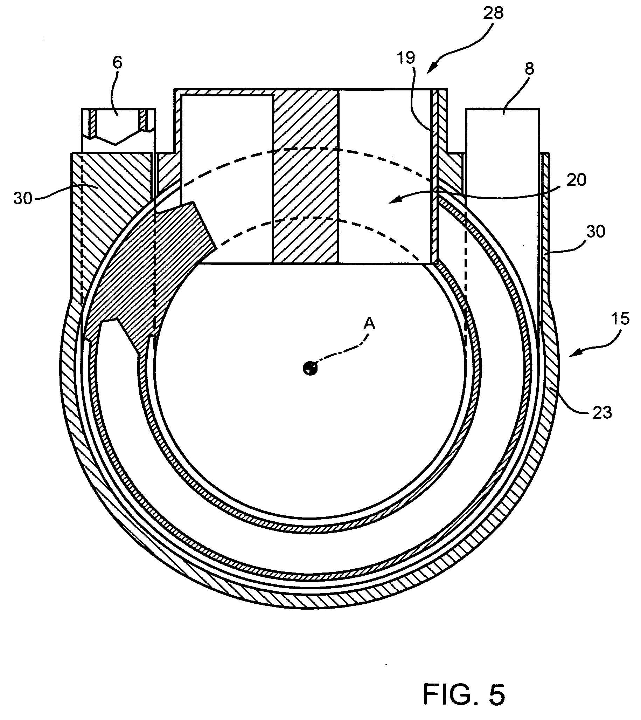

Casing 15 comprises two end walls 21 and 22, and a cylindrical lateral wall 23. The hollow elongated members 1 and 2 are spaced with respect to the lateral wall 23 in such a way that the hollow elongated member 1 defines a tubular compartment 24 extending inside helix 3, an annular compartment 25 extending between helix 3 and the lateral wall 23; while the hollow elongated member 2 defines a tubular compartment 26 extending inside helix 4, an annular compartment 27 extending between helix 4 and the lateral wall 23. With reference to figure 5, casing 15 comprises a combustion fume outlet port 28 arranged along the lateral wall 23 at space 20, which is shaped like an annular sector delimited by opposite sides of the straight end portions 6 and 8. With reference to figure 3, baffle 17 is arranged along turn 11 of helix 3 adjacent to the straight end portion 6, while baffle 18 is arranged along turn 11 of helix 4 adjacent to fitting 7.

According to an alternative embodiment, baffle 18 is supported by wall 22 and, with the latter, prevents the passage of the fumes from the tubular compartment 26 to the annular compartment 27 at the end of exchanger 14. With reference to figure 5, the combustion fume extraction conduit 19 is fitted to the outlet port 28 and in space 20. Thereby, the combustion fumes follow the path indicated by the arrows in figure 3: in fact, the combustion fumes transit from the tubular compartment 24 to the annular compartment 25 via gap 12, continue in axial direction to the annular compartment 27, from which they access, via gap 12, the tubular compartment 26, from which they are expelled via the extraction conduit 19.

The hollow elongated members 1 and 2 partly extend outside casing 15 and are in fact supported by casing 15. In greater detail, the hollow elongated member 1 is supported by the end wall 21 at fitting 5, and by the lateral wall 23 at the straight end portion 6. Similarly, the hollow elongated member 2 is supported by the end wall 22 at fitting 7, and by the lateral wall 23 at the straight end portion 8. The straight end portions 6 and 8 extend from opposite sides of the outlet port 28. With reference to figure 5, casing 15 comprises, at the outlet port 28 and at the straight end portions 6 and 8, a supporting element 30, which in addition to serving the function of supporting the straight end portions 6 and 8 and the extraction conduit 19, serves the function of making the coupling hermetic between casing 15, on one side, and the straight end portions 6 and 8 and the extraction conduit 19, on the other. Each of the elongated and continuous members 1 and 2 is supported by casing 15 only at fitting 5, 7 and at straight end 6, 8.

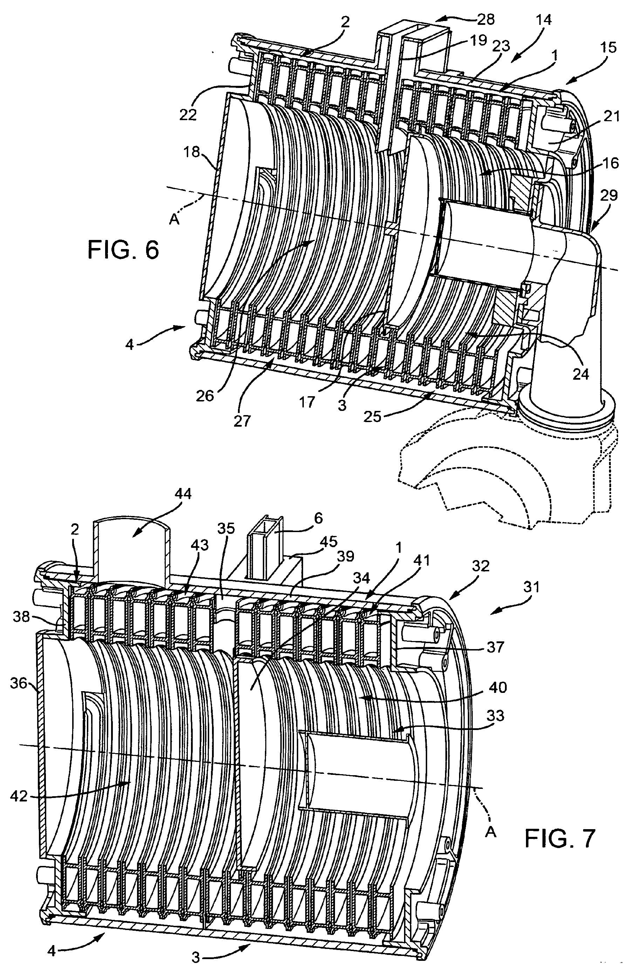

In greater detail and with reference to figure 6, the fume supply area 16 is defined by a pre-mix gas burner 29 fixed to the end wall 21, the end walls 21 and 22 substantially having an annular shape and being connected to the gas burner 29 and to baffle 18, respectively. The extraction conduit 19 has a rectangular form from above, and baffle 18 is connected to the end wall 22.

With reference to figure 4, numeral 31 indicates a second type of condensing heat exchanger, which comprises the hollow elongated members 1 and 2; a casing 32, a combustion fume supply area 33; and three combustion fume baffles 34, 35 and 36. The hollow and elongated members 1 and 2 partly wound in a helix are arranged in reciprocal contact at the respective straight end portions 6 and 8 and at the parts of turns 11 adjacent to the straight end portions 6 and 8 so as to form space 20.

Similarly to the disclosure with reference to the first embodiment, casing 32 comprises two end walls 37 and 38, and a cylindrical lateral wall 39. The hollow elongated members 1 and 2 are spaced with respect to the lateral wall 39 in such a way that the hollow elongated member 1 defines a tubular compartment 40 extending inside helix 3, an annual compartment 41 extending between helix 3 and the lateral wall 39; and the hollow elongated member 2 defines a tubular compartment 42 extending inside helix 4, and an annular compartment 43 extending between helix 4 and the lateral wall 39. Casing 15 comprises a combustion fume outlet port 44 arranged along the lateral wall 39 at the annular compartment 43. Baffle 34 is arranged along turn 11 of helix 3 adjacent to space 20 inside the tubular compartment 40, baffle 35 is arranged between helix 4 and casing 32, and baffle 36 is arranged along a turn 11 of helix 4 at fitting 7 to close the end of the tubular compartment 42. Thereby, the combustion fumes follow the path indicated by the arrows in figure 4: the combustion fumes transit from the tubular compartment 40 in the annular compartment 41 via gap 12, converge in space 20, from which they directly access the tubular compartment 42, from which they access, via gap 12, the annular compartment 43, from which they are expelled via the outlet port 44. In this case, space 20 serves the function of decreasing the load losses during the transit of the combustion fumes from the annular compartment 41 to the tubular compartment 42.

With reference to figure 7, casing 32 comprises a support 45 arranged along the lateral wall 39 and which hermetically supports the straight end portion 6. A similar support 45 (not shown in figure 7) supports the straight end portion 8. Moreover, baffle 36 is connected to the end wall 38.

Lastly, it is apparent that modifications, variants and improvements may be made to the described condensing heat exchangers without departing from the scope of the appended claims.

## Claims

1. A condensing heat exchanger (14; 31) for a gas boiler; the heat exchanger (14; 31) comprising a casing (15; 32), in which combustion fumes are conducted to an outlet port (28; 44); and a first and second hollow elongated member (1, 2) having respective end portions (6, 8) and wound at least partly about an axis (A) so as to form a first and second helix (3, 4), which are arranged successively along the axis (A) inside the casing (15; 32), and form respective turns (11) separated by respective helical gaps (12); the first and second helix (3, 4) being configured to define, between the end portions (6, 8) and a turn (11) of the first helix (3) and a turn (11) of the second helix (4) facing each other, a space (20) having a dimension parallel to the axis (A) that is larger than the helical gaps (12), wherein the combustion fume outlet port (28) communicates directly with said space (20).

2. A heat exchanger as claimed in Claim 1, wherein the space (20) dimension parallel to the axis (A) is larger than the axial dimension of a turn (11).

3. A heat exchanger as claimed in any one of the foregoing Claims, wherein the space has a maximum extension about the axis (A) which subtends an angle of 180°.

4. A heat exchanger as claimed in any one of the foregoing Claims, wherein the first helix (3) defines a first tubular compartment (24; 40), placed inside the first helix (3), and a first annular compartment (25; 41), placed outside the first helix (3) and communicating with the first tubular compartment (24; 40) via the helical gap (12); the second helix (4) defines a second tubular compartment (26; 42) placed inside the second helix (4), and a second annular compartment (27; 43), placed outside the second helix (4) and communicating with the second tubular compartment (26; 42) via the helical gap (12); and the heat exchanger (14; 31) comprises at least a first baffle (17; 34) configured to prevent direct communication between the first tubular compartment (24; 40) on one side, and the space (20) and the second tubular compartment (26; 42), on the other.

5. A heat exchanger as claimed in any one of the foregoing Claims, comprising a combustion fume extraction conduit (19) fitted to the outlet port (28) and extending at least partly inside the space (20), so as to expel the combustion fumes directly from the casing (15).

6. A heat exchanger as claimed in Claim 4, comprising a second baffle (35), which is located along a turn (11) adjacent to the space (20), and is configured to separate the second annular compartment (43) from the first annular compartment (41) and from the space (20); the combustion fume outlet port (44) being arranged to communicate directly with the second annular compartment (43).

7. A heat exchanger as claimed in any one of the foregoing Claims, wherein the adjacent end portions (6, 8) of the first and second hollow elongated member (1, 2) are substantially straight and parallel to each other.

8. A heat exchanger as claimed in Claim 4, wherein the end portions (6, 8) extend partly inside and partly outside the casing (15; 32).

9. A heat exchanger as claimed in any one of the foregoing Claims, wherein the casing (15; 32) comprises a lateral wall (23; 39), preferably cylindrical; and at least one supporting member (30; 45) for hermetically supporting the end portions (6, 8).

10. A heat exchanger as claimed in any one of the foregoing Claims, wherein the hollow elongated members (1, 2) each comprise a tube (9) with fins (10) deformed locally, parallel to the axis (A), to form lips (13), which act as spacers between the turns (11) of the respective first and second helix (3, 4), and between the adjacent turn (11) portions of the first helix (3) and second helix (4).

## Patentansprüche

1. Ein Kondensationswärmetauscher (14; 31) für einen Gasboiler; der Wärmetauscher (14; 31) weist ein Gehäuse (15; 32) auf, in dem Brenngase zu einem Auslassanschluss (28; 44) geführt werden; und ein erstes und zweites hohles, langgestrecktes Teil (1, 2) mit entsprechenden Endabschnitten (6, 8) und zumindest teilweise um eine Achse (A) derart gewunden, dass diese eine erste und eine zweite Helix (3, 4) bilden, die nacheinander entlang der Achse (A) innerhalb des Gehäuses (15; 32) angeordnet sind, und jeweils Windungen (11) bilden, die jeweils von Windungszwischenräumen (12) getrennt sind; wobei die erste und zweite Helix (3, 4) derart ausgebildet sind, dass sie zwischen den Endabschnitten (6, 8) und einer Windung (11) der ersten Helix (3) und einer Windung (11) der zweiten Helix (4), die sich einander gegenüber liegen, einen Raum (20) definieren, der parallel zu der Achse (A) eine Ausdehnung hat, die größer als die Windungsabstände (12) ist, wobei der Brenngas-Auslassanschluss (28) direkt mit dem Raum (20) kommuniziert.

2. Ein Wärmetauscher nach Anspruch 1, wobei die Ausdehnung des Raums (2) parallel zu der Achse (A) größer als die axiale Ausdehnung einer Windung (11) ist.

3. Ein Wärmetauscher nach einem der vorhergehenden Ansprüche, wobei der Raum eine maximale Ausdehnung um die Achse (A) hat, die einen Winkel von 180° schneidet.

4. Ein Wärmetauscher nach einem der vorhergehenden Ansprüche, wobei die erste Helix (3) ein erstes rohrförmiges Kompartiment (24; 40), das innerhalb der ersten Helix (3) angeordnet ist, und ein erstes ringförmiges Kompartiment (25; 41), das außerhalb der ersten Helix (3) angeordnet ist und mit dem ersten rohrförmigen Kompartiment (24; 40) über einen Windungszwischenraum (12) kommuniziert; die zweite Helix (4) ein zweites rohrförmiges Kompartiment (26; 42), das innerhalb der zweiten Helix (4) angeordnet ist, und ein zweites ringförmiges Kompartiment (27; 42), das außerhalb der zweiten Helix (4) angeordnet ist und mit dem zweiten rohrförmigen Kompartiment (26; 42) über den Windungszwischenraum (12) kommuniziert; und der Wärmetauscher (14; 31) wenigstens eine erste Trennwand (17; 34) aufweist, die ausgebildet ist, die direkte Kommunikation zwischen dem ersten rohrförmigen Kompartiment (24; 40) einerseits und dem Raum (20) und dem zweiten rohrförmigen Kompartiment (26; 42) andererseits zu verhindern.

5. Ein Wärmetauscher nach einem der vorhergehenden Ansprüche mit einem Brenngas-Auslasskanal (19), der an den Auslassanschluss (28) angeschlossen ist und sich zumindest teilweise innerhalb des Raums (20) derart erstreckt, dass die Brenngase direkt aus dem Gehäuse (15) ausgestoßen werden.

6. Ein Wärmetauscher nach Anspruch 4 mit einer zweiten Trennwand (35), die entlang einer Windung (11) in der Nähe zu dem Raum (20) angeordnet ist und derart ausgebildet ist, dass diese das zweite ringförmige Kompartiment (43) von dem ersten ringförmigen Kompartiment (41) und von dem Raum (20) trennt; wobei der Brenngas-Auslassanschluss (44) zur direkten Kommunikation mit dem zweiten ringförmigen Kompartiment (43) angeordnet ist.

7. Ein Wärmetauscher nach einem der vorhergehenden Ansprüche, wobei die benachbarten Endabschnitte (6, 8) des ersten und zweiten hohlen, langestreckten Teils (1, 2) im Wesentlichen gerade und parallel zueinander sind.

8. Ein Wärmetauscher nach Anspruch 4, wobei sich die Endabschnitte (6, 8) teilweise innerhalb und teilweise außerhalb des Gehäuses (15; 32) erstrecken.

9. Ein Wärmetauscher nach einem der vorhergehenden Ansprüche, wobei das Gehäuse (15; 32) eine laterale Wand (23; 39) aufweist, vorzugsweise zylindrisch; und wenigstens ein Befestigungsteil (30; 45) zum hermetischen Befestigen der Endabschnitte (6, 8).

10. Ein Wärmetauscher nach einem der vorhergehenden Ansprüche, wobei die hohlen, langgestreckten Teile (1, 2) jeweils ein Rohr (9) mit lokal umgeformten Rippen (10), parallel zu der Achse (A), aufweisen, um Ansätze (13) zu bilden, die als Abstandsstücke zwischen den Windungen (11) jeweils der ersten und zweiten Helix (3, 4), und zwischen den benachbarten Windungsabschnitten (11) der ersten Helix (3) und der zweiten Helix (4) wirken.

## Revendications

1. Echangeur de chaleur à condensation (14 ; 31) pour une chaudière à gaz ; l'échangeur de chaleur (14 ; 31) comprenant un boîtier (15 ; 32) dans lequel les fumées de combustion sont dirigées vers un orifice de sortie (28 ; 44) ; et un premier et un second élément allongé creux (1, 2) ayant des parties d'extrémité (6, 8) respectives et enroulés au moins partiellement autour d'un axe (A) afin de former une première et une seconde hélice (3, 4) qui sont agencées successivement le long de l'axe (A) à l'intérieur du boîtier (15 ; 32) et forment des tours (11) respectifs séparés par des espaces hélicoïdaux (12) respectifs ; les première et seconde hélices (3, 4) étant configurées pour définir, entre les parties d'extrémité (6, 8) et un tour (11) de la première hélice (3) et un tour (11) de la seconde hélice (4) se faisant face, un espace (20) ayant une dimension parallèle à l'axe (A) qui est supérieure aux espaces hélicoïdaux (12), dans lequel l'orifice de sortie de fumées de combustion (28) communique directement avec ledit espace (20).

2. Echangeur de chaleur selon la revendication 1, dans lequel la dimension de l'espace (20) parallèle à l'axe (A) est supérieure à la dimension axiale d'un tour (11).

3. Echangeur de chaleur selon l'une quelconque des revendications précédentes, dans lequel l'espace a une extension maximum autour de l'axe (A) qui sous-tend un angle de 180°.

4. Echangeur de chaleur selon l'une quelconque des revendications précédentes, dans lequel la première hélice (3) définit un premier compartiment tubulaire (24 ; 40) placé à l'intérieur de la première hélice (3), et un premier compartiment annulaire (25 ; 41) placé à l'extérieur de la première hélice (3) et communiquant avec le premier compartiment tubulaire (24 ; 40) via l'espace hélicoïdal (12) ; la seconde hélice (4) définit un second compartiment tubulaire (26 ; 42) placé à l'intérieur de la seconde hélice (4), et un second compartiment annulaire (27 ; 43) placé à l'extérieur de la seconde hélice (4) et communiquant avec le second compartiment tubulaire (26 ; 42) via l'espace hélicoïdal (12) ; et l'échangeur de chaleur (14 ; 31) comprend au moins un premier déflecteur (17 ; 34) configuré pour empêcher la communication directe entre le premier compartiment tubulaire (24 ; 40) d'un côté, et l'espace (20) et le second compartiment tubulaire (26 ; 42) de l'autre.

5. Echangeur de chaleur selon l'une quelconque des revendications précédentes, comprenant un conduit d'extraction de fumées de combustion (19) monté sur l'orifice de sortie (28) et s'étendant au moins partiellement à l'intérieur de l'espace (20), afin d'expulser les fumées de combustion directement à partir du boîtier (15).

6. Echangeur de chaleur selon la revendication 4, comprenant un second déflecteur (35) qui est positionné le long d'un tour (11) adjacent à l'espace (20), et est configuré pour séparer le second compartiment annulaire (43) du premier compartiment annuaire (41) et de l'espace (20) ; l'orifice de sortie des fumées de combustion (44) étant agencé pour communiquer directement avec le second compartiment annulaire (43).

7. Echangeur de chaleur selon l'une quelconque des revendications précédentes, dans lequel les parties d'extrémité (6, 8) adjacentes des premier et second éléments allongés creux (1, 2) sont sensiblement droites et parallèles entre elles.

8. Echangeur de chaleur selon la revendication 4, dans lequel les parties d'extrémité (6, 8) s'étendent partiellement à l'intérieur et partiellement à l'extérieur du boîtier (15 ; 32).

9. Echangeur de chaleur selon l'une quelconque des revendications précédentes, dans lequel le boîtier (15 ; 32) comprend une paroi latérale (23 ; 39) de préférence cylindrique ; et au moins un élément de support (30 ; 45) pour supporter hermétiquement les parties d'extrémité (6, 8).

10. Echangeur de chaleur selon l'une quelconque des revendications précédentes, dans lequel les éléments allongés creux (1, 2) comprennent chacun un tube (9) avec des ailettes (10) déformées localement, parallèles à l'axe (A), afin de former des lèvres (13) qui servent de dispositifs d'espacement entre les tours (11) des première et seconde hélices (3, 4) respectives, et entre les parties de tour (11) adjacentes de la première hélice (3) et de la seconde hélice (4).
